# EUROPEAN PATENT SPECIFICATION

(11) **EP 0 801 454 B1**
(45) Date of publication and mention of the grant of the patent: **20.10.1999**
(21) Application number: 96200916.3
(22) Date of filing: 12.04.1996
(51) Int. Cl.: H02G 15/113

(54) **Cable sleeve**
Kabelmuffe
Manchon de câble

(43) Date of publication of application: 15.10.1997
(73) Proprietor: Lovink Terborg B.V., NL-7061 DT Terborg (NL)
(72) Inventor: Schellevis, Camille Jean Baptiste, 7011 CH Gaanderen (NL); Van den Hout, Jan Simon, 7051 WP Varsseveld (NL); Brus, Bernard Louis, 7006 JK Doetinchem (NL); Roodenburg, Pieter, 7061 BE Terborg (NL)
(74) Representative: Schumann, Bernard Herman Johan

(56) References cited:
- WO-A-86/02785
- DE-C- 855 599
- US-A- 2 930 835
- US-A- 3 255 302
- US-A- 4 743 209

## Description

The invention relates to a cable sleeve comprising two metal shells, which can be mutually coupled by coupling means in order to form a housing, the inner space of which is accessible to at least one cable core via at least one opening bounded by edge zones of both shells, wherein the coupling means comprise a plurality of lips present on the edges of at least one of the shells, which lips can each be bent round the opposite edge of the other shell.

Such a sleeve is known from US-A-2930835. A disadvantage of said cable sleeve is that a considerable bending force has to be exerted on a small free end of the lips. When closing the cable sleeve manually the bending force is limited by the human fingers.

It is an object of the present invention to leviate the mentioned disadvantage. It is further an object of the present invention to ensure a proper and watertight closure of both shells.

These objects are reached by the present invention, which is characterized in that each lip has a weakened zone serving as bending zone, and an end zone with enlarged surface.

According to the invention it is possible to exert a larger bending force on the lip with a lower pressure on the free end of the lip. Because of this it is possible to close the cable sleeve more tightly and to obtain a better watertight cable sleeve.

In a preferred embodiment of a sealing strip is arranged between the facing end zones of both shells. This improves the watertightness of the cable sleeve.

Another preferred embodiment according to the invention is characterized in that each lip extends perpendicular to the mutual facing end zones. Because of this the shells can be easily positioned and put together.

A specific variant has the characteristic that at least one shell has an opening for admitting filling mass, into which opening a plastic ring is clicked which is closeable by a cover, for instance a screw cover of for instance plastic.

In yet another embodiment this variant can have the special feature that the ring and/or the cover carries information, for example a brand name, a type designation or the like.

The sleeve preferably has the feature that the opening is formed in a flat sheet-metal zone. The ring can have a simple rotation symmetrical shape, while the connection is good. It is noted that the ring may also have the function of covering irregularities in the shape of the opening.

A particular embodiment of the cable sleeve according to the invention has the special feature that the shells are substantially symmetrical.

An embodiment wherein the edge zone of a shell has an eye through which a relatively wide and thus rigid lip of the other shell can be placed in order to form a hinge therewith, has the advantage that simple prepositioning of the shells can be achieved, thereby facilitating the positioning of the shell parts prior to bending of the lips.

It is noted that the sleeve according to the invention is filled after assembly with a filling mass, for example liquid polyurethane, which cures and thus forms an insulating mass. This material adheres strongly to the surface of the shells. Even in the case where the lips have rusted through after a period of time, this cured filling mass holds the shells together.

The ring and the associated cover can for instance be injected moulded together from polypropylene and mutually connected in per se known manner by a plastic wire. The quality of the material does not have to meet high standards. Recycled quality is also considered suitable.

The inlet of the cables into the sleeve, which is not shown in the drawings to be described hereinbelow, is given a robust form. This results in the following advantages:
* leakage of filling mass to the outside is prevented.
* the sleeve can be buried quickly in the ground without sinking downward under the weight of the ground.
* the electrical connection between the cable cores present in the sleeve is not loaded by movements of the cable during curing of the filling mass.

In order to realize all this the cable is wound up with relatively soft, rubber-like material which can for instance be self-vulcanizing. Into the recess in the region of the cable inlet is clicked a plastic, for example polypropylene, mould part which follows the contour of the wound cables. The large number of recesses in the mould part permits a wide range of winding diameters.

A ridge in the middle of the mould part protrudes through the sheet-metal, thereby simplifying fixing by means of snap connections. The ridge increases the rigidity of the mould part. The ridge can carry information, for example a brand name, a type designation, a serial number or the like. This information is arranged in relief by means of insert pieces in the injection mould. This is more attractive than arranging the text in the sheet-metal because greater detail is possible in plastic. It is further less expensive to stock different injection moulded parts than different shell parts.

Sealing between mould part and sheet-metal can take place with a thin standing membrane on the mould part.

In the case the sleeve is a branch sleeve, the height of the partition between the main core and the branch core varies so that a labyrinth-like seal is created.

A specific embodiment is characterized by fixation means for fixing a cable relative to the cable sleeve, which fixation means comprise a collar consisting of two co-acting parts.

This latter variant can advantageously have the special feature that the collar has at least one protrusion which fits in a hole present in a shell. The invention will now be elucidated with reference to the annexed drawings of a random embodiment. In the drawings:
Figure 1 shows an exploded view of a cable sleeve according to the invention;
Figure 2 shows a perspective view of an assembled sleeve according to the invention;
Figure 3 shows a partly perspective view of a part of the sleeve during assembly;
Figure 4 shows the same view in the final phase of assembly; and
Figure 5 shows a partly broken away perspective view of another part of the sleeve.

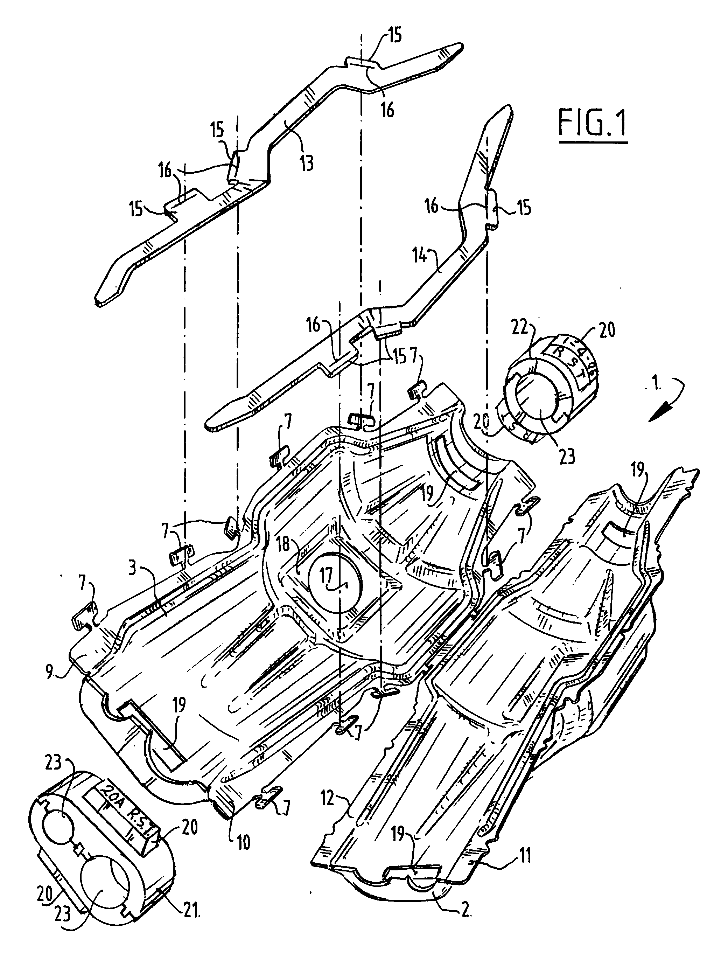

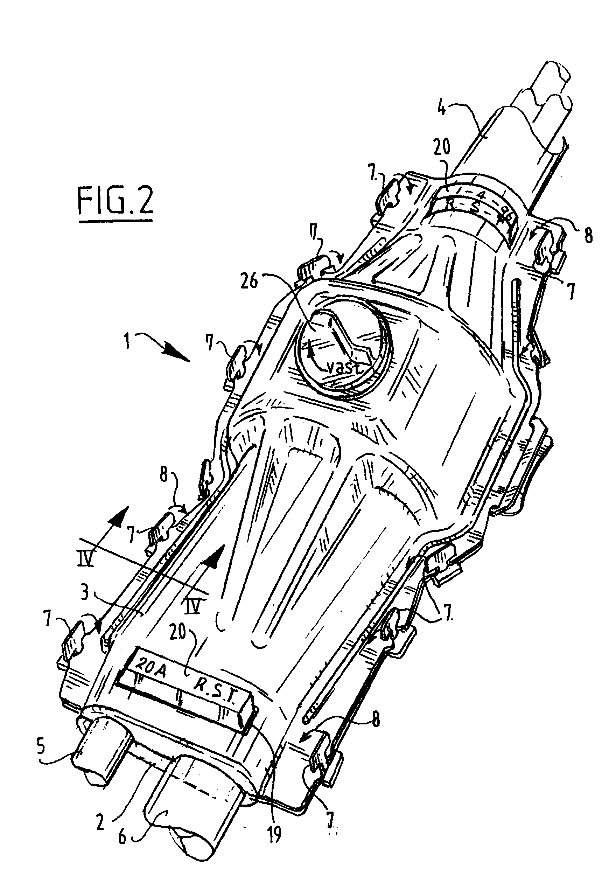

Figures 1 and 2 show a cable sleeve 1 comprising two metal shells 2,3 which together form a housing, the inner space of which is accessible to a number of cables 4,5,6. The internal structure and the manner of coupling of the cables are of no significance to the present invention.

Each shell 2,3 consists of galvanized steel. The lower shell 3 comprises a number of lips which for the sake of convenience are all designated by 7 and which have a general T-shape with widened press-on surface. The lips 7 can be bent as according to arrows 8 such that the respective side edges 9,10,11,12 of shells 2,3, after being placed on each other, can be mutually connected with the bent lips. Figure 2 shows the manner in which this coupling can take place.

Figure 1 shows that the lips 7 are bent out of the main plane of the edges 9,10, for instance through almost 90 degrees, whereby good positioning of the edges 11,12 can be realized easily.

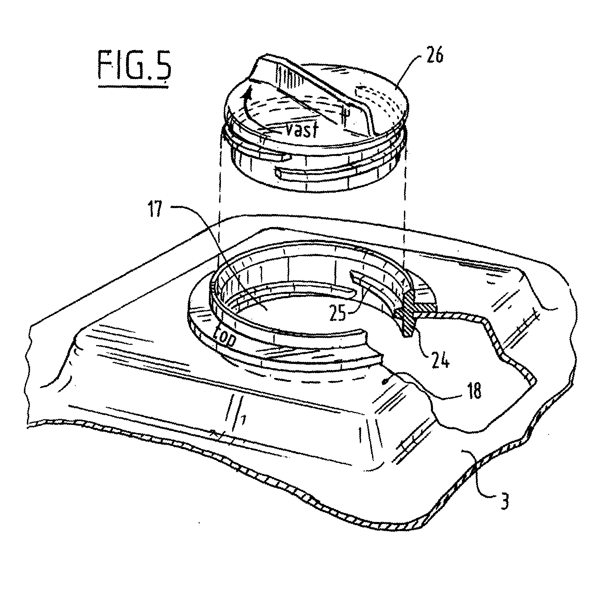

Foam material sealing strips 13,14 have respective shapes corresponding with those of edges 9,10. They are provided locally with widened portions 15 which each have a cut 16 which can co-act in positioning manner with a relevant lip 7. The shell 3 has a filling opening 17 in a flat shell part 18 to be described with reference to figure 5.

The end zones of shells 2,3 are provided with slotted holes generally designated 19 into which fit protrusions 20 which form part of collars 21,22 embodied in divided form. These collars have through-holes 23 for passage of cables 4,5,6. The protrusions 20 are provided with information. The parts of which collars 21,22 consist can advantageously be wholly symmetrical. They can be embodied in plastic whereby the information can be arranged in relief via the injection moulding process.

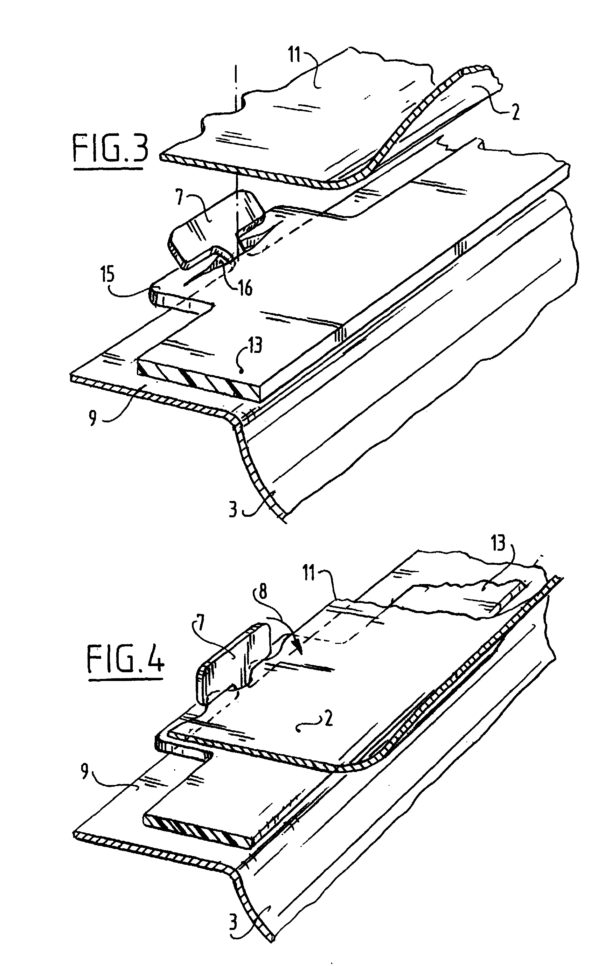

Figure 3 shows the manner in which a sealing strip 13 is positioned. After placing of the shell 2, the lips 7 can be bent in the manner shown in figure 4 as according to arrow 8.

Figure 5 shows that into the through-hole 17 an annular insert piece 24 has been snapped which is provided with internal screw thread 25. A screw cap 26 can co-act herewith. Both insert piece 24 and screw cap 26 can be made of plastic by injection moulding. Similarly to protrusions 20, the outer surface of these components can carry information in relief.

The opening 17 serves for filling of an assembled sleeve with filling mass. Such a filling mass is generally supplied in a flexible bag or pouch. This pouch can easily be fixed to the sleeve in order to enable filling without spillage. A bag clamp can be used for this purpose which consists for instance of a plastic such as polypropylene. This injection moulded component is fixed to the corner point of the pouch and then clicked onto the annular insert piece 24. The pouch can thereafter be cut through in per se known manner and emptied into the sleeve. After emptying, the bag clamp can again be released. By making use of a click connection between the sleeve and the pouch the mutual connection cannot be broken during emptying of the pouch.

## Claims

1. Cable sleeve comprising two metal shells consisting of sheet-metal, which can be mutually coupled by coupling means in order to form a housing, the inner space of which is accessible to at least one cable core via at least one opening bounded by edge zones of both shells, wherein the coupling means comprise a plurality of lips present on the edges of at least one of the shells, which lips can each be bent round the opposite edge of the other shell,
**characterized in that**
each lip has a weakened zone serving as bending zone and an end zone with enlarged surface.

2. Cable sleeve as claimed in claim 1,
**characterized by** a compressible sealing strip, for instance of foam plastic, arranged between the mutually facing edge zones of the shells.

3. Cable sleeve as claimed in claim 2,
**characterized in that** the sealing strip has through-holes, for example cuts, for passage of and thus positioning by at least a number of lips.

4. Cable sleeve as claimed in claims 2 and 3,
**characterized in that** each lip extends perpendicularly to said mutually facing end zones.

5. Cable sleeve as claimed in claims 1-4,
**characterized in that** at least one shell has an opening for admitting filling mass, into which filling opening a plastic ring is clicked which is closeable by a cover, for instance a screw cover of for instance plastic.

6. Cable sleeve as claimed in claim 5,
**characterized in that** the opening is formed in a flat sheet-metal zone.

7. Cable sleeve as claimed in claim 1-6,
**characterized in that** the edge zone of a shell has an eye through which a relatively wide and thus rigid lip of the other shell can be placed in order to form a hinge therewith.

8. Cable sleeve as claimed in claims 1-7,
**characterized by** fixation means for fixing a cable relative to the cable sleeve, which fixation means comprise a collar consisting of two co-acting parts.

9. Cable sleeve as claimed in claim 8,
**characterized in that** the collar has at least one protrusion which fits into a hole present in a shell.

10. Cable sleeve as claimed in claims 1-9,
**characterized in that** the sheet-metal is aluminium.

## Patentansprüche

1. Kabelmuffe, bestehend aus zwei Blech-Metallschalen, die durch Kuppelmittel miteinander gekuppelt werden können, um ein Gehäuse zu bilden, dessen Innenraum für mindestens eine Kabelader über mindestens eine Öffnung zugänglich ist, die von Kantenbereichen beider Schalen umgrenzt wird, wobei die Kuppelmittel aus mehreren an den Kanten von mindestens einer der Schalen vorhandenen Lippen bestehen, die jeweils um die gegenüberliegende Kante der anderen Schale gebogen werden können,
**dadurch gekennzeichnet, daß** jede Lippe einen schwächeren Bereich aufweist, der als Biegebereich dient, und einen Endbereich mit verbreiterter Oberfläche aufweist.

2. Kabelmuffe nach Anspruch 1, **gekennzeichnet durch** einen zusammendrückbaren Dichtungsstreifen, beispielsweise aus Schaumstoff, der zwischen den einander zugewandten Kantenbereichen beider Schalen angeordnet ist.

3. Kabelmuffe nach Anspruch 2, **dadurch gekennzeichnet, daß** der Dichtungsstreifen durchgehende Löcher, z. B. Einschnitte, aufweist, um mindestens eine Reihe von Lippen durchzulassen und so durch sie positioniert zu werden.

4. Kabelmuffe nach den Ansprüchen 2 und 3, **dadurch gekennzeichnet, daß** sich jede Lippe im rechten Winkel zu den genannten einander zugewandten Endbereichen erstreckt.

5. Kabelmuffe nach den Ansprüchen 1 bis 4, **dadurch gekennzeichnet, daß** mindestens eine Schale eine Öffnung hat, um Füllmasse einzulassen, wobei in diese Öffnung durch Einschnappen ein Kunststoffring eingesetzt wird, der mit einer Abdeckung verschließbar ist, z. B. mit einer Schraubenabdeckung, z. B. aus Kunststoff.

6. Kabelmuffe nach Anspruch 5, **dadurch gekennzeichnet, daß** die Öffnung in einem flachen Blechabschnitt ausgeführt ist.

7. Kabelmuffe nach den Ansprüchen 1 bis 6, **dadurch gekennzeichnet, daß** der Kantenbereich einer Schale eine Öse aufweist, durch die eine relativ breite und damit feste Lippe der anderen Schale gesteckt werden kann, um mit ihr ein Scharnier zu bilden.

8. Kabelmuffe nach den Ansprüchen 1 bis 7, **gekennzeichnet durch** Befestigungsmittel zur Befestigung eines Kabels an der Kabelmuffe, wobei diese Befestigungsmittel aus einer Fassung bestehen, die aus zwei zusammenwirkenden Teilen besteht.

9. Kabelmuffe nach Anspruch 8, **dadurch gekennzeichnet, daß** die Fassung mindestens einen Vorsprung aufweist, der in ein in einer Schale vorhandenes Loch paßt.

10. Kabelmuffe nach den Ansprüchen 1 bis 9, **dadurch gekennzeichnet, daß** es sich bei dem Blech um Aluminium handelt.

## Revendications

1. Manchon de câble comprenant deux coquilles métalliques, se composant de tôle, qui peuvent être mutuellement couplées par des moyens de couplage afin de former un boîtier dont l'espace intérieur est accessible à au moins une âme de câble via au moins une ouverture délimitée par des zones de bords des deux coquilles, le moyen de couplage comprenant ainsi plusieurs languettes présentes sur les bords d'au moins une des coquilles, lesquelles languettes pouvant être recourbées autour du bord opposé de l'autre coquille,
caractérisé en ce que :
chaque languette comporte une zone plus fragile servant de zone de recourbement et une zone d'extrémité avec une surface agrandie.

2. Manchon de câble selon la revendication 1, caractérisé par une bande d'étanchéité compressible, par exemple, de plastique mousse, disposée entre les zones de bords des coquilles, situées mutuellement en regard.

3. Manchon de câble selon la revendication 2, caractérisé en ce que la bande d'étanchéité comporte des trous traversants, par exemple, des découpes, pour le passage et le positionnement d'au moins un certain nombre de languettes.

4. Manchon de câble selon la revendication 2 ou la revendication 3, caractérisé en ce que chaque languette s'étend de manière perpendiculaire par rapport aux zones d'extrémité situées mutuellement en regard.

5. Manchon de câble selon les revendications 1 à 4, caractérisé en ce qu'au moins une coquille comporte une ouverture pour admettre une masse de remplissage, laquelle ouverture de remplissage comprend une bague de plastique encliquetée qui peut être refermée par un couvercle, par exemple, un couvercle à vis en plastique.

6. Manchon de câble selon la revendication 5, caractérisé en ce que l'ouverture est formée dans une zone plate de tôle.

7. Manchon de câble selon les revendications 1 à 6, caractérisé en ce que la zone de bord d'une coquille comporte un oeil à travers lequel une languette relativement large et rigide de l'autre coquille peut être insérée pour former avec ce dernier une articulation.

8. Manchon de câble selon les revendications 1 à 7, caractérisé par des moyens de fixation pour fixer un câble par rapport au manchon de câble, lesquels moyens de fixation comprennent un collier se composant de deux parties coopérantes.

9. Manchon de câble selon la revendication 8, caractérisé en ce que le collier comporte au moins un élément en saillie qui vient s'insérer dans un trou ménagé dans la coquille.

10. Manchon de câble selon les revendications 1 à 9, caractérisé en ce que la tôle est en aluminium.
